(19) Europäisches Patentamt
European Patent Office
Office européen des brevets

(11) **EP 1 725 021 A2**

(12) **EUROPEAN PATENT APPLICATION**

(43) Date of publication:
**22.11.2006 Bulletin 2006/47**

(51) Int Cl.:
***H04N 5/225*** (2006.01)

(21) Application number: **06252532.4**

(22) Date of filing: **15.05.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **20.05.2005 JP 2005148559**

(71) Applicant: **CANON KABUSHIKI KAISHA**
**Ohta-ku, Tokyo (JP)**

(72) Inventor: **Imao, Eiji**
**c/o Canon Kabushiki Kaisha**
**Tokyo (JP)**

(74) Representative: **Legg, Cyrus James Grahame et al**
**ABEL & IMRAY,**
**20 Red Lion Street**
**London WC1R 4PQ (GB)**

(54) **Method, system and apparatus for imaging by remote control**

(57)    In remote photographing of a camera constituted separately by an imaging apparatus and a display apparatus, the imaging apparatus continuously generates display image data and storage image data, and temporarily stores by relating the storage image data to photographing timing data. Further, the imaging apparatus transmits to the display apparatus by relating the display image data to the photographing timing data, and the display apparatus displays a display image. When photographing is instructed by a user of the display apparatus, the display apparatus transmits timing data corresponding to an image displayed at the time of detecting the photographing instruction to the imaging apparatus. The imaging apparatus determines a storage image corresponding to the timing data from the display apparatus to be a photographed image and stores the image.

# FIG.9

t1 TRANSFER TIME OF FINDER DATA

t2 PROCESSING TIME OF FINDER DISPLAY

t3 TRANSFER TIME OF PHOTOGRAPHING INSTRUCTION

**Description**

BACKGROUND OF THE INVENTION

Field of the Invention

The present invention relates to a method, a system and an apparatus for imaging by remote control.

Description of the Related Art

A common digital camera has been configured so as to display a finder image on a liquid crystal screen provided in a camera main body and allow a user to photograph while confirming the finder image when a still image is photographed. Further, photographed data that is stored in a storage device provided in the main body can be displayed on the liquid crystal screen and the image can be confirmed.

A digital camera has also been proposed in which a display function section can be separated from the camera main body that includes an imaging function and a display function, and a camera section having the imaging function and a viewer section having the display function are separately configured. Further, as discussed in Japanese Patent Application Laid-Open No. H5-072608, in a separately configured digital camera, each of the camera section and the viewer section can include wireless communication means, and a user operates the viewer section, thereby remotely controlling the camera section to photograph an image. In Japanese Patent Application Laid-Open No. H5-072608, a user can display the finder image photographed by the camera section on the screen of the viewer section, determine shutter timing while viewing the finder image and can photograph the image.

In remote photographing by a wireless communication camera constituted separately by the camera section and the viewer section, photographed data in the camera section are coded and transmitted by wireless, and thereafter decoded in the viewer section and displayed on the finder screen. Accordingly, a transmission delay and a processing delay occur. Hence, the finder image when the user operating the viewer section presses a shutter button, and the image to be photographed by the camera section taken at different times. That is, a problem arises in which the image is captured at a different time from the image intended by the user.

To solve the above-described problem, it is proposed to continuously store the still image at a frame rate equivalent to the finder image in the viewer section. However, there is a problem in that, if the still image having high resolution is photographed, the volume of image data becomes extremely large. Further, in order to continuously transmit and receive the finder image, a very wide communication band is required. As a result, the frame rate of the finder image or the like decreases, which is not desirable.

On the other hand, also when the operation of the viewer section by the user (release operation of shutter button or the like) is transmitted to the camera section as a control signal, a transmission delay and processing delay occur. This delay further causes a time lag between the timing intended by the user and the timing of an eventually photographed image.

A technique to solve a similar problem which causes a transmission delay is disclosed in Japanese Patent Application Laid-Open Nos. H7-274158 and H9-284627. These documents describe a method for correcting a deviation of a camera direction, zoom control or the like by an amount of the transmission delay between a camera and an operation terminal. However, this technique relates to the camera direction and the correction of a zoom when remote control is executed. Therefore, this technique is not related to the delay problem when the still image is photographed.

Further, in Japanese Patent Application Laid-Open No. H10-070696, a method is discussed which prevents a shutter chance from being lost due to a processing delay between operation of a shutter button and the actual photographing operation. In this case, an imaging section, a display section and an operation key are integrated in an electronic still camera. In this method, buffering of the photographed image is started by half pressing the shutter button, is completed by fully pressing the shutter button, and a buffered image is recorded as the photographed image. However, this technique does not address the problem which causes the transmission delay and the difference between the finder image and the photographed image.

In the remote photographing by a telecommunication camera constituted separately by the camera section and the viewer section, transmission and processing delays occur. Accordingly, there is a problem in that, when the user presses the shutter button to photograph the image while confirming the finder image in the viewer section, an image different from the timing intended by the user is obtained. It has, therefore, been desired to find measures to cope with this problem.

SUMMARY OF THE INVENTION

The present invention is directed to enabling a user to capture an image in timing intended by the user in remote photographing with a camera having a camera section and a viewer section separately.

According to a first aspect of the present invention, there is provided a method as specified in claims 1 to 8.

According to a second aspect of the present invention, there is provided an imaging system as specified in claim 9, a display unit for use in such a system as specified in claim 10, and an exposure unit as specified in claim 11.

In another aspect of the present invention, there is provided a computer program as specified in claim 12 or 13, and a storage medium as specified in claim 14.

Further features of the present invention will become apparent from the following detailed description of exemplary embodiments with reference to the attached drawings.

BRIEF DESCRIPTION OF THE DRAWINGS

The accompanying drawings, which are incorporated in and constitute a part of the specification, illustrate embodiments of the invention and, together with the description, serve to explain the principles of the invention.

Fig. 1 is an external view showing a camera according to an embodiment of the present invention.

Figs. 2A and 2B are diagrams showing a network for remote photographing using a wireless communication camera.

Fig. 3 is a block diagram showing an exemplary internal configuration of the camera section of a wireless communication camera.

Fig. 4 is a block diagram showing an exemplary internal configuration of the viewer section of a wireless communication camera.

Figs. 5A to 5D are diagrams showing exemplary operations between a camera section and a viewer section.

Fig. 6 is a diagram illustrating the operation of a camera section in a state of displaying a finder image.

Fig. 7 is a diagram illustrating the operation of a camera section in a preparatory stage for photographing.

Fig. 8 is a diagram showing the operation of a ring buffer in a camera section.

Fig. 9 is a schematic view showing delay time of remote photographing which arises between a camera and a viewer sections.

Fig. 10 is a processing flow for measuring delay time according to a second embodiment.

Fig. 11 is a processing flow for adjusting a buffer area size based on delay time according to a second embodiment.

Fig. 12 is a processing flow for adjusting a frame rate of buffering based on delay time according to a second embodiment.

DETAILED DESCRIPTION OF THE EMBODIMENTS

Embodiments of the invention will be described in detail below, by way of example only, with reference to the drawings.

First Embodiment

As an imaging apparatus according to a first embodiment of the present invention, a remotely controllable wireless communication camera will exemplarily be described below.

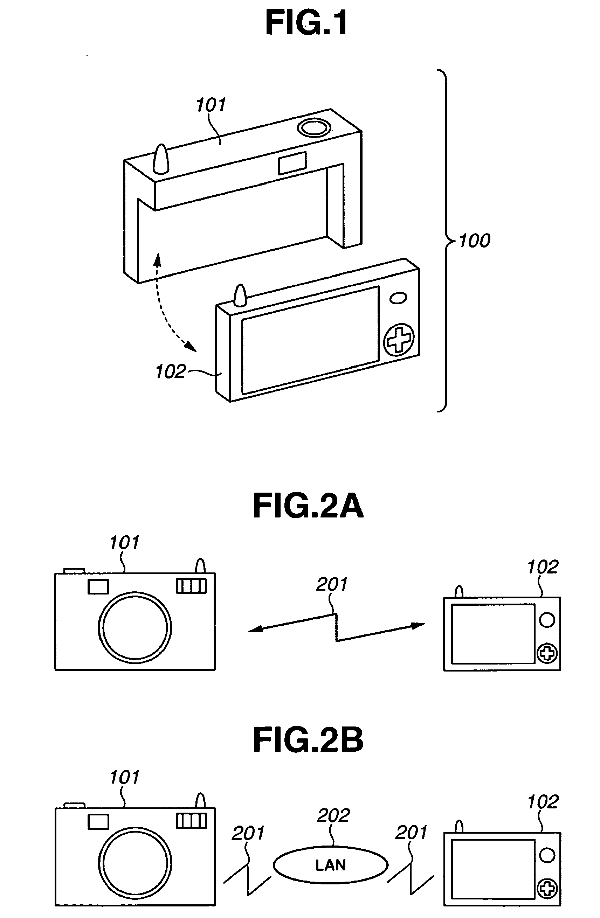

Fig. 1 shows the external view of a camera 100 according to the present embodiment. The camera 100 can be separated to a camera section 101 which captures an image and generates digital data, and to a viewer section 102 which executes finder display and receives operations from the user. Each of the camera section 101 and the viewer section 102 includes a wireless communication function and can be remotely controlled. That is, the user carries out operations while viewing the finder display in the viewer section 102, so that the camera section 101, which is typically located some distance away, can be controlled to photograph the image.

Figs. 2A and 2B show an example of a network for remotely photographing an image using the wireless communication camera 100. Fig. 2A shows operation of direct wireless communication 201 between the camera section 101 and the viewer section 102. Data transmitted between the camera section 101 and the viewer section 102 comprises a finder image during photographing, an image to be stored and a control signal. The details will be described later. Further, as shown in Fig. 2B, it may be configured such that the camera section 101 communicates with the viewer section 102 through a LAN 202 or the like.

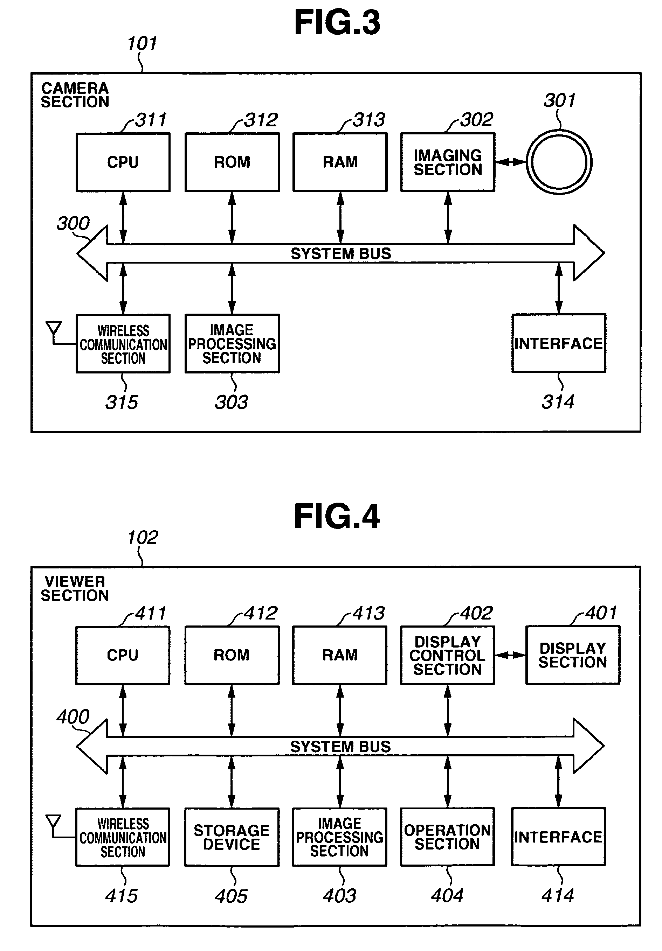

Fig. 3 is a block diagram showing an exemplary internal configuration according to the camera section 101.

The camera section 101 includes an imaging section 302, an image processing section 303 and a wireless communication section 315. The image processing section 303 generates image data from an image obtained by a camera lens 301 using a photoelectric conversion device (CCD, CMOS or the like). The image processing section 303 converts raw data generated in the imaging section 302 into a still image such as a JPEG and a moving image such as a MPEG-4. The wireless communication section 315 transmits the converted image data (still image and/or moving image) to the viewer section 102. The wireless communication section 315 is used for transmission and reception of a control signal from the viewer section 102. Further, the camera section 101 includes a CPU 311 for executing a control program to control the above-described sections, a ROM 312 for storing the control program, a RAM 313 used as a temporary storage area and an equipment interface 314 for integrating the equipment by connecting/communicating with the viewer section 102. The above-described sections are connected together by a system bus 300.

In this embodiment, it is intended to use an ad hoc mode in wireless LAN standards (IEEE 802.11 standards) as a wireless communication method used in the wireless communication section 315, but it is not limited to this method.

Fig. 4 is a block diagram showing an exemplary internal configuration of the viewer section 102.

The viewer section 102 includes a wireless communication section 415, an image processing section 403, a display control section 402, an operation section 404 and a storage device 405. The wireless communication section 415 receives the image data transmitted from the camera section 101, and transmits and receives the control signal to control the camera section 101. The image processing section 403 decodes the image data (still image such as JPEG and/or moving image such as MPEG-4) received in the wireless communication section 415. The display control section 402 controls screen display on a display section 401. The operation section 404 receives operation instructions from the user. The storage device 405 mainly stores the still image that should be kept. The display section 401 is configured by, for example, a liquid crystal screen, and the operation section 404 is configured by, for example, a shutter button, and a cross key.

Further, the viewer section 102 includes a CPU 411, ROM 412, a RAM 413 and an equipment interface 414. The CPU 411 executes a control program to control the above-described sections. The ROM 412 stores the control program, and the RAM 413 is used as a temporary storage area. The equipment interface 414 integrate the equipment by connecting/communicating with the viewer section 102. The above-described sections are connected by a system bus 400.

As the wireless communication method used in the wireless communication section 415, it is intended to use the ad hoc mode in the wireless LAN standards similar to the above-described wireless communication section 315, but it is not limited to this method. Further, as the storage device 405, for example, a semiconductor storage medium, or a magnetic storage medium is employed. However, an external storage medium may be employed which is for example detachably attached.

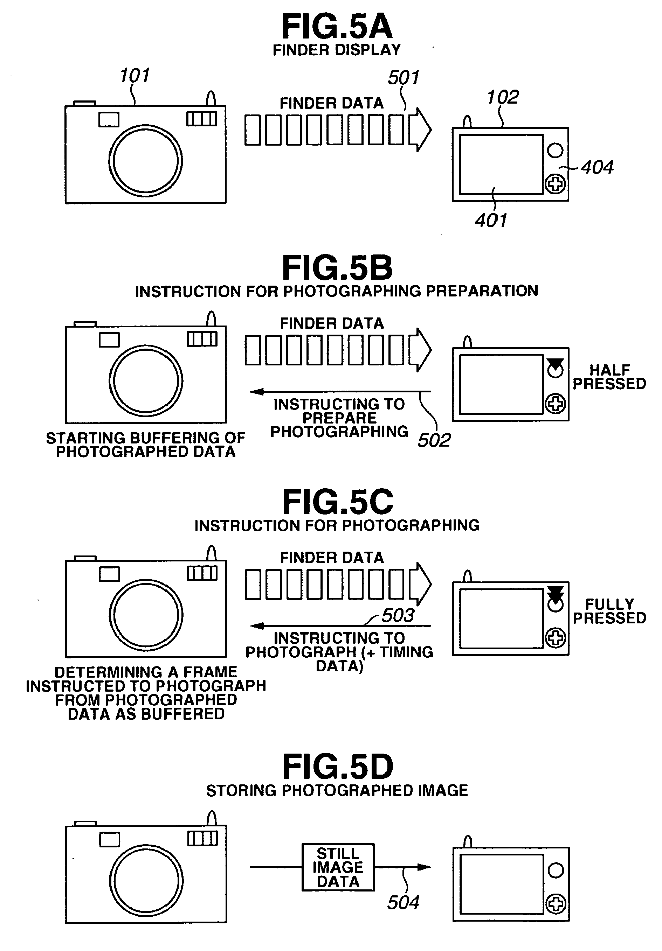

Figs. 5A to 5D are diagrams showing exemplary operation between the camera section 101 and the viewer section 102 according to the present embodiment.

Fig. 5A shows a state of displaying the finder image and waiting for operations of the user. The camera section 101 transmits finder data 501 to the viewer section 102 by wireless and the viewer section 102 displays the finder image on the display section 401. The resolution of the finder image and a frame rate may be changed in response to the screen resolution of the display section in the viewer section 102 and the transmission speed of wireless communication.

Fig. 5B shows a state when an instruction to prepare photographing an image is transmitted by the operations of the user. When the viewer section 102 detects that the shutter button in the operation section 404 is half pressed by the user, an instruction signal 502 to prepare the photographing is transmitted to the camera section 101. When the camera section 101 receives the instruction signal 502 to prepare the photographing from the viewer section 102, the camera section 101 starts to generate still image data to be stored, from the image data generated in the imaging section 302. At the same time, the still image data starts to be buffered in a buffer area, which will be described later.

Fig. 5C shows a state when the instruction to prepare photographing is transmitted by the operations of the user. When the viewer section 102 detects that the shutter button in the operation section 404 is fully pressed by the user, an instruction signal 503 for photographing is transmitted to the camera section 101 together with timing data specifying the finder image which is displayed on the display section 401 at this time. When the camera section 101 receives the instruction signal 503 for photographing from the viewer section 102, the transmission of the finder data 501 and the buffering of the still image data are terminated. Based on the received timing data, corresponding still image data are determined from among a plurality of still image data as buffered.

Fig. 5D shows a state in which the still image data is stored. The camera section 101 transmits the still image data determined on the basis of the above-described timing data to the viewer section 102. The viewer section 102 stores the still image data transmitted from the camera section 101 in the storage device 405. At this time, the still image data to be stored may be displayed for confirmation using the display section 401. In this embodiment, the still image data is stored in the storage device 405 of the viewer section 102. However, it can be configured so as to provide the storage device (not shown) in the camera section 101 and store the determined still image data therein.

In the above description, the shutter button is half pressed as the transmission trigger instructing to prepare photographing and the shutter button is fully pressed as the transmission trigger instructing to photograph. However, it may be also realized by providing a button separately. Further, buffering operation in the camera section 101 may be configured to be constantly executed.

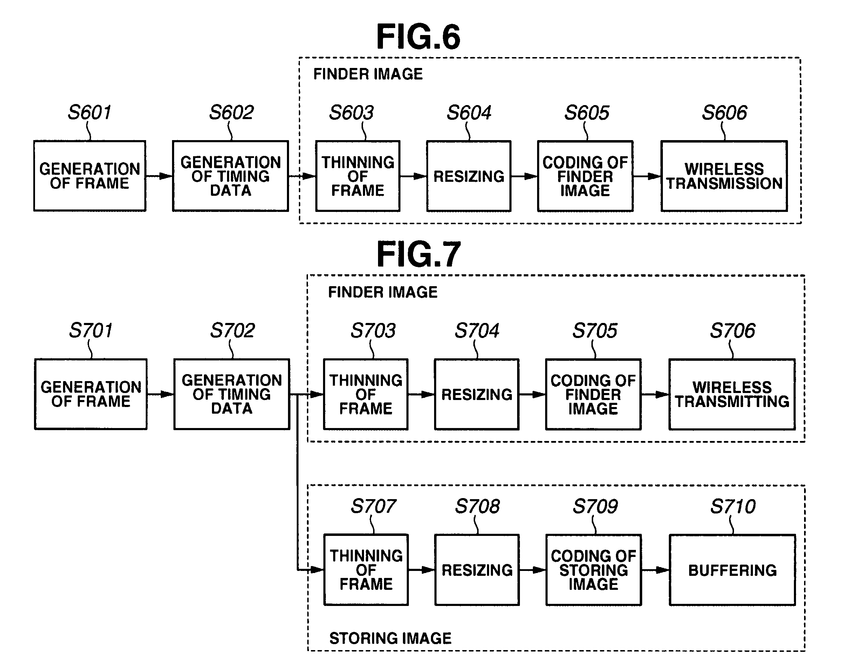

Fig. 6 is a flow chart showing the detail of the operation of the camera section 101 in a state of displaying a finder image (corresponding to Fig. 5A).

In step S601, the imaging section 302 continuously generates image data. The image data generated in the imaging section 302 serves as the original of the finder image data and the still image data for storing, and is hereinafter referred to as "original image data". The resolution and the frame rate of the original image data generated in the imaging section 302 are changeable. Thus, it is possible to set low resolution at a high rate (e.g. 30 fps, 320 X 240 pixels) and high resolution at a low rate (e.g. 5 fps, 1280 X 960 pixels).

In step S602, the CPU 311 generates the timing data and associates these data with each image data generated in the step S601. As the timing data, the cumulative number of generated frames, a time stamp or the like is used. In the present exemplary embodiment, the timing data is not particularly designated and any data can be used as long as it can specify the timing.

In step S603, the CPU 311 thins out an image frame in accordance with the frame rate of the finder data to be transmitted to the viewer section 102. For example, when the original image data is generated at 30 fps, if the finder data are transmitted at 15 fps, the original image frame in even numbers of the original image data (or odd numbers) can be thinned out. The transmissible frame rate may be adjusted in response to a condition of a wireless communication line.

In step S604, the image processing section 303 executes processing (resize) to match the original image data with the resolution (size) of the finder data.

In step S605, the image processing section 303 codes the resized original image data to generate the finder data. For the coding of the image data, a moving image compression code (any code including MPEG-4, H, 263) is utilized.

In step S606, the wireless communication section 315 transmits the generated finder data to the viewer section 102. Corresponding timing data are associated with each image frame of the finder data.

Fig. 7 is a flow chart showing the detail of the operation of the camera section 101 in a state of preparing the photographing (period between Figs. 5B and 5C). Fig. 7 is different from Fig. 6 in that the processing concerning the still image data for storing is executed in addition to the operation described with reference to Fig. 6. Note that prior to the following operation, the resolution of the still image data for storing and a coding format are set and inputted by the user using the operation section 404 or the like, and a set value is stored in the RAM 313 or the like. However, since this setting operation is similar to a conventional digital camera, the detail description is omitted.

In step S701, the imaging section 302 continuously generates the original image data.

In step S702, the CPU 311 generates the timing data and associates these data with each original image data generated in the step S701.

Steps S703 to S706 (processing concerning finder data) are similar to the above-described steps S603 to S606, and thus, further description is omitted.

The following steps S707 to S710 serve as the processing concerning a still image for storing and are executed in parallel with the processing concerning finder data.

In step S707, the CPU 311 thins out the image frame in accordance with the frame rate of buffering of the still image data which will be described later. For example, when the original image data is generated at 30 fps, if the still image data are buffered at 5 fps, the original image frame can be thinned out so that a rate becomes one-sixth of the original image data on average. An interval in thinning out is normally different from the thinning of the finder data executed in the step S703. However, it may be the same.

In the step S708, the image processing section 303 executes processing (resize) to match the original image data with the resolution (size) of the still image data for storing.

In the step S709, the image processing section 303 codes the resized original image data and generates the still image data. When the image data is coded, a still image compression code (any code including JPEG and JPEG 2000) is utilized.

In the step S710, the CPU 311 buffers the still image data generated in the step S709 in the buffer area secured on the RAM 313 beforehand. As a buffer system, a ring buffer is used which successively overwrites from the oldest photographed data when the photographed data have been stored and a space is lost in the buffer area. Accordingly, efficient buffering can be implemented. It can be expected that, the higher the frame rate of the buffering becomes, the smaller a time lag of the still image data determined by the timing data (to be described later), thus it is desirable to buffer the data at the maximum frame rate which can be processed by the device.

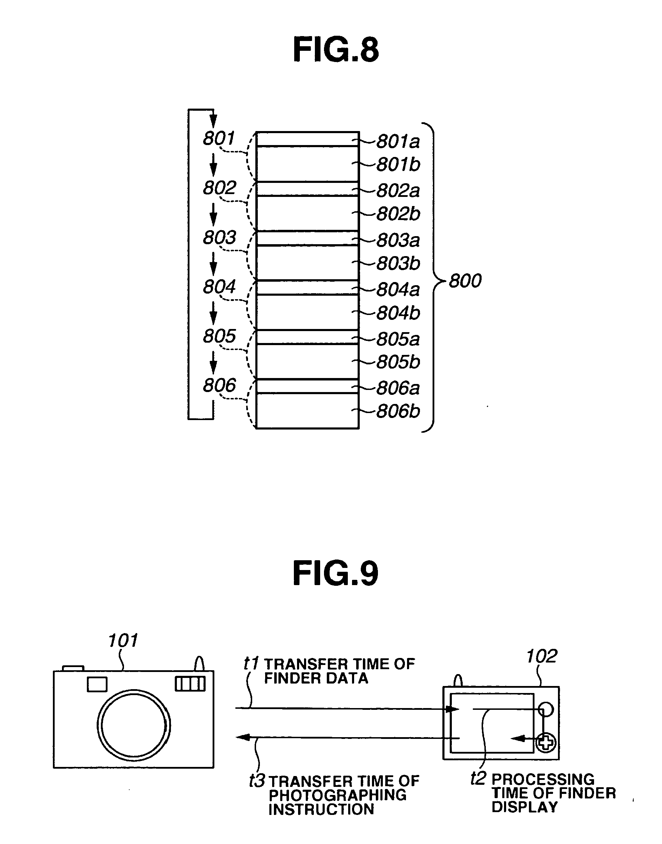

Fig. 8 is a diagram showing the buffering operation to the ring buffer. In this embodiment, a ring buffer 800 capable of buffering data for six still images will be described as an example. Each of reference numerals 801 to 806 denotes a buffer area having a sufficient size to write one frame of the still image data. One frame of the still image data is configured by coded image data and corresponding timing data. For example, in the buffer area 801, timing data 801A and coded image data 801B are stored. It is the same with buffer areas 802 to 806. When the buffering of the still image data starts, each storage area is written in turn such that first photographed data is stored in the buffer area 801 and next photographed data in the buffer area 802 until the last buffer area 806 is stored. The next photographed data returns to the buffer 801 to be stored where the oldest data is currently stored (that is, the image data is overwritten). The subsequent photographed data is stored (overwritten) in buffer area 802. In this embodiment, the timing data are stored in the ring buffer 800 together with the coded image data. However, any storage method in which a corresponding relation is maintained between the timing data and the coded image data can be utilized.

As described above with reference to Fig. 5C, when the viewer section 102 detects that the shutter button in the operation section 404 is fully pressed by the user, an instruction signal 503 to photograph is transmitted to the camera section 101 together with the timing data (cumulative number, time stamp or the like) specifying the finder image which is displayed on the display section 401 at that point in time. When the camera section 101 receives the instruction signal 503 to photograph from the viewer section 102, the transmission of the finder data 501 and the buffering of the still image data are terminated, and corresponding still image data are determined from among a plurality of buffered still image data based on the received timing data.

However, since the frame rate of the finder data and the frame rate of the still image data to be buffered are not necessarily consistent, the still image data consistent with the timing data transmitted from the viewer section 102 are not necessarily present. Hence, if such still image data is not present, the still image data having the timing data closest to the timing data transmitted from the viewer section 102 are searched from the buffer area and selected therefrom. If two still image data having the closest timing data are present before and behind the still image data, the still image data immediately behind the still image data may be selected. Alternatively, it may be determined to store two or more still image data instead of determining and storing only one still image data.

As described above, a technique can be provided in which the camera section and the viewer section execute the above-described operation, thus enabling the user to capture the image at the intended time while being provided with a finder image having a sufficient frame rate.

Second Embodiment

In a second embodiment, operations in accordance with buffering executed in the camera section 101 will be described in detail. Since the configuration of the apparatus and the whole operation are similar to the first embodiment, the description thereof is omitted.

In remote photography, since delay times fluctuate owing to changing circumstances of the communication line and the code format of finder data, there is a possibility that the delay time is too long for the size of the buffer. Hence, in the present embodiment, the delay time is measured, and the result is utilized to change a buffer area and a time interval of image data to be buffered, so as to solve the above problem.

Fig. 9 is a schematic view showing delay time in remote photography.

The delay time in remote photography principally includes transfer time (T1) in which the camera section 101 generates the finder data and transfers the finder data to the viewer section 102, processing time (T2) in which the viewer section 102 receives the finder data and displays on the display section 401, and transfer time (T3) in which the viewer section 102 accepts pressing of a shutter button by a user to transmit an instruction to photograph, to the camera section 101 and the imaging section 302. In practice, a delay due to focus operation or the like should be also considered. However, to make description simple, it is omitted.

Accordingly, still image data is obtained with a delay corresponding to the sum of T1, T2 and T3 from timing of the finder image displayed on the display section 401 when the user presses the shutter button. That is, in order that the user can acquire the still image data at the desired time, images at least corresponding to the sum of T1, T2 and T3 are required to be buffered. T1 and time T3 can vary depending on circumstances such as the communication line, and time T2 can vary depending on a moving image format of the finder data or the like.

On the other hand, concerning buffer capacity, owing to the problem of a cost or the like, a sufficient buffer area can not be always secured. As a result, if delay time is long, desired data can be overwritten by new data. That is, since prior photographed data can be overwritten and becomes ineffective in order of time, when a camera receives the instruction to photograph, there is a possibility that new photographed data corresponding only to times shorter than the sum of T1, T2 and T3 from an instructed frame for photographing are maintained.

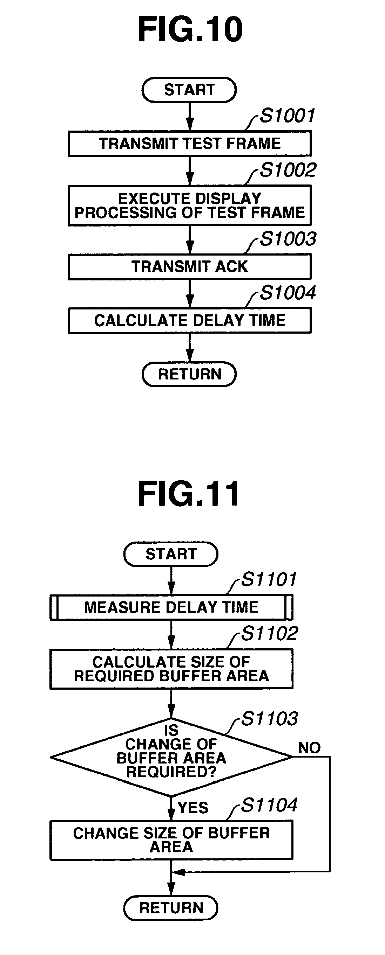

Fig. 10 shows a processing flow for measuring delay time. In this embodiment, after the power is turned on, reception of a first transfer request of the finder data from a viewer triggers the camera to start measurement of delay time. However, the camera may autonomicaly start measurement operation, or may be configured so as to periodically execute the measurement operation.

In step S1001, the camera section 101 creates the finder data including a test frame for measuring delay time and transmits the data to the viewer section 102. The test frame may be a frame for measurement use or practical imaged data. In any case, for example, information (hereinafter, referred to as flag information) indicating a frame for measurement is added. Further, the CPU 311 stores timing data corresponding to the test frame in the RAM 313. In this embodiment, as the timing data, a time stamp using a timer (not shown) included in the camera section 101 is employed.

In step S1002, the viewer section 102 executes display processing of the received finder data. The test frame to which the flag information is added is also processed similarly to a normal frame. However, it may not practically be displayed on the display section 401.

In step S1003, when the display processing of the test frame to which the flag information is added, is completed, the viewer section 102 immediately transmits an acknowledgement (ACK) to the camera section 101.

In step S1004, when the ACK is received from the viewer section 102, the camera section 101 acquires the received time stamp from the timer (not shown) used in the step S1001, and also calculates delay time from a difference between the received time stamp and the timing data (time stamp) stored in the RAM 313 in step S1101.

Time from the step S1001 to the step S1002 corresponds to the time T1 shown in Fig. 9, time from the step S1002 to the step S1003 corresponds to the time T2 shown in Fig. 9 and time from the step S1003 to the step S1004 corresponds to the time T3 shown in Fig. 9.

Fig. 11 shows a processing flow for adjusting a buffer area size based on delay time.

In the step S1101, the delay time is measured as described above.

In step S1102, the CPU 311 calculates the size of the buffer area required to buffer the still image data corresponding to the obtained delay time. For example, if the size of required buffer area is represented by Bs (byte), the data size of one frame of the still image data by Ds (byte), the frame rate of buffering by Fr (fps) and the measured delay time by Dl (sec), then the size of the buffer area requires a size not less than Bs calculated from the following expression (A). In this embodiment, since the still image data can be a compressed image, the data size is not always fixed. Thus, it is desirable to determine the data size in consideration of an allowance. For example, a data size corresponding to maximum data size is used as a typical value.

$$Bs = Ds \times Dl \times Fr \quad (A)$$

In step S1103, the CPU 311 judges whether the change of the size of the buffer area secured in the RAM 313 is required. That is, judgment is made whether the size of the required buffer area Bs calculated in the step S1102 is larger than the size of the current buffer area. If Bs is larger, the process proceeds to step S1104 and if Bs is smaller, the processing of adjustment operation is judged unnecessary, and the process ends.

In step S1104, the CPU 311 changes the size of the buffer area secured in the RAM 313 into the size not less than Bs.

In the step S1103, in the case in which Bs is smaller, processing is not particularly executed. However, an operation may be performed to reduce an area.

In the above description, the size of the buffer area is changed in response to delay time so that the frame rate of the still image data as buffered is maintained to execute the buffer operation. However, in general, the buffer capacity cannot be increased indefinitely. For example, in the present embodiment, there is restriction that the capacity of the RAM 313 sets an upper limit. Hence, the operation will now be described which adjusts the frame rate of the still image data to be buffered, so that the data photographed during the delay time can be buffered without changing the size of the predetermined buffer area. That is, if the size of the buffer area is insufficient compared to the delay time, the frame rate is reduced, and time for buffering is increased.

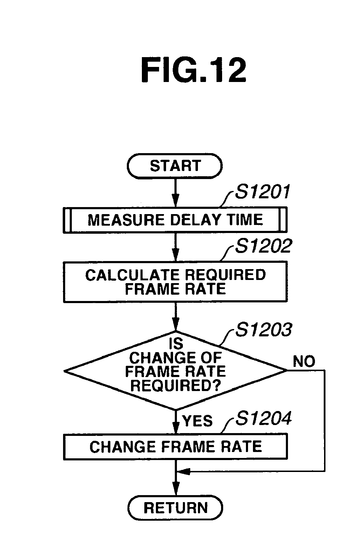

Fig. 12 shows a processing flow for adjusting the frame rate of buffering based on delay time.

In step S1201, delay time is measured as described above.

In step S1202, the CPU 311 calculates a frame rate capable of buffering the still image data corresponding to the obtained delay time. For example, if the frame rate of buffering is expressed in Fr (fps), the size of the buffer area in Bs (byte), the data size of one frame of the still image data in Ds (byte) and the measured delay time in Dl (sec), then the frame rate should not be more than Fr calculated from the following expression (B). In this embodiment, since there is also a case in which the still image data is a compressed image, the data size is not always fixed. Thus, it is desirable to determine the data size in consideration of an allowance. For example, a data size corresponding to maximum data size is used as a typical value.

$$Fr = Bs / (Ds \times Dl) \quad (B)$$

In step S1203, the CPU 311 judges whether the change of the frame rate is required. That is, judgment is made whether the frame rate of buffering Fr calculated in the step S1202 is smaller than the current frame rate (that is, the number of images buffered per hour is lower). If Fr is smaller than the current frame rate, the process proceeds to step S1104. If Fr is larger, the processing of adjustment operation is judged unnecessary, and the process ends.

In step S1204, the CPU 311 adjusts the thinning processing to be executed, for example, in step 707 of Fig. 7, so that the frame rate of buffering is changed to not more than Fr.

The above described two adjustment operations (concerning buffer area and frame rate) may be executed independently or in combination.

As described above, in remote photography using a wireless communication camera constituted separately by a camera section and a viewer section, a technique can be provided in which the camera section and the viewer section execute the above-described measurement of delay time, and the camera section executes an adjustment operation concerning buffering. Thus, the still image data corresponding to delay time can be buffered securely.

According to the above description, in remote photography by a wireless communication camera constituted separately by a camera section and a viewer section, a technique can be provided in which the user can capture an image at an intended time while being provided with a finder image having a sufficient frame rate.

While the present invention has been described with reference to exemplary embodiments, it is to be understood that the invention is not limited to the disclosed exemplary embodiments. The scope of the following claims is to be accorded the broadest interpretation so as to encompass all modifications, equivalent structures and functions.

This application claims priority from Japanese Patent Application No. 2005-148559 filed May 20, 2005, which is hereby incorporated by reference herein in its entirety.

**Claims**

1. A method for capturing an image from an imaging system having an exposure unit remote from, and in communication with, a display unit, the method comprising the following steps:

   configuring the exposure unit to capture a continuous series of first images at successive times;
   generating from the series of first images a series of display images;
   generating from the series of first images a series of storage images for temporary storage in a buffer means;
   generating information for identifying which
   display image was captured at the same time each
   storage image was captured, or at a time closest to the time each storage image was captured;
   storing the series of storage images together with the associated said information for each image;
   transmitting the series of display images to the
   display unit;
   displaying said series of display images;
   receiving user input data to take a photograph whilst one of said series of display images is being
   displayed;
   selecting from the series of stored images the image or images captured at the same time or a time closest to the time of capture of the display image being displayed when the user input is received;
   transferring said stored image or images from the buffer means to a further storage area.

2. A method for capturing an image as claimed in claim 1, wherein the said information is timing data that indicates the time of capture of the storage image or the display image.

3. A method for capturing an image as claimed in claim 1, wherein the said information is a photographed cumulative number of the display image.

4. A method for capturing an image as claimed in claim 1, wherein the said information is a time stamp when the display image was captured.

5. A method for capturing an image as claimed in any preceding claim, wherein half-pressing of the shutter button of the display apparatus triggers start of capture of the first images and fully-pressing of the shutter button of the display apparatus triggers the selection of a stored image.

6. A method for capturing an image as claimed in claim 1, wherein if the storage image corresponding to the said information is not stored in the memory, the storage image corresponding to designated information that is similar to the designated information transmitted from the displaying apparatus, is stored in the further storage area.

7. A method for capturing an image as claimed in claim 1, further comprising:

   a measurement process for measuring delay time from the start of transferring the display image in the transmission process until imaging is carried out by an instruction to capture an image; and
   a setting process for setting the amount of buffer means storage for storing the storage images based on the measured delay time.

8. A method for capturing an image as claimed in claim 1, further comprising:

a measurement process for measuring delay time from the start of transferring the display image in the transmission process until imaging is carried out by an instruction to capture an image; and
a setting process for setting the frame rate of the storage image stored in the buffer means process based on the measured delay time.

9. An imaging system having an exposure unit remote from, and in communication with, a display unit, a buffer means, a storage means, and control means, the exposure unit being constructed and arranged to generate a continuous series of first images at successive times, the imaging system further comprising display image generating means to generate from said series of first images a series of display images for display on the display unit, storage image generating means for generating from said series of first images a series of storage images, means for providing information for identifying which display image was captured at the same time each storage image was captured or at a time closest to the time each storage image was captured, the buffer means temporarily storing the series of storage images together with the said information for each image, the control means being adapted to a. receive user input instructions to take a photograph whilst a particular one of said series of display images is being displayed on the display unit, b. select which storage image or images were captured at the same time or a time closest to the time the particular one of said series of display images was captured, and c. store the selected storage image of images in the storage means.

10. A display unit for use in an imaging system as claimed in claim 9, the display unit comprising display means, control means, and wireless communication means for communicating with an exposure unit remote from the display unit, the control means being adapted to a. receive user input instructions to take a photograph whilst a particular one of said series of display images is being displayed on the display unit, and b. transmit said instructions to the exposure unit.

11. An exposure unit for use in an imaging system as claimed in claim 9, comprising, a buffer means, a storage means, and control means, the exposure unit being constructed and arranged to generate a continuous series of first images at successive times, the imaging system further comprising display image generating means to generate from said series of first images a series of display images for display on a remote display unit, storage image generating means for generating from said series of first images a series of storage images, means for providing information for identifying which display image was captured at the same time each storage image was captured or at a time closest to the time each storage image was captured, the buffer means temporarily storing the series of storage images together with the said information for each image, the control means being adapted to a. receive from a remote display unit user input instructions to take a photograph whilst a particular one of said series of display images is being displayed on the display unit, b. select which storage image or images were captured at the same time or a time closest to the time the particular one of said series of display images was captured, and c. store the selected storage image of images in the storage means.

12. A computer program which when loaded and executed by a control section of an imaging apparatus performs the following method:

a generation process for continuously generating a display image to display on a display apparatus separately from the imaging apparatus and a storage image to be stored wherein the imaging apparatus continuously captures images;
a storage process for continuously storing in a memory by relating the storage image to designated information which designates the storage image;
a transmission process for continuously transmitting to the display apparatus by relating the display image to designated information which designates the display image;
a reception process for receiving designated information which designates an image displayed on the display apparatus in timing of detecting an instruction to photograph from a user in the display apparatus; and
a determination process for determining the storage image corresponding to the designated information received in the reception process to be a photographed image.

13. A computer program which when loaded and executed by a control section of an imaging apparatus performs a method as claimed in any one of claims 1 to 8.

14. A storage medium storing a computer program as claimed in claim 12 or claim 13.

# FIG.1

# FIG.2A

# FIG.2B

# FIG.3

101

CAMERA SECTION

| 311 | 312 | 313 | 302 | 301 |
|-----|-----|-----|-----|-----|
| CPU | ROM | RAM | IMAGING SECTION | |

300

SYSTEM BUS

| WIRELESS COMMUNICATION SECTION | IMAGE PROCESSING SECTION | | INTERFACE |
|-----|-----|-----|-----|
| 315 | 303 | | 314 |

# FIG.4

102

VIEWER SECTION

| 411 | 412 | 413 | 402 | 401 |
|-----|-----|-----|-----|-----|
| CPU | ROM | RAM | DISPLAY CONTROL SECTION | DISPLAY SECTION |

400

SYSTEM BUS

| WIRELESS COMMUNICATION SECTION | STORAGE DEVICE | IMAGE PROCESSING SECTION | OPERATION SECTION | INTERFACE |
|-----|-----|-----|-----|-----|
| 415 | 405 | 403 | 404 | 414 |

EP 1 725 021 A2

# FIG.5A
## FINDER DISPLAY

101

FINDER DATA 501

102

404

401

# FIG.5B
## INSTRUCTION FOR PHOTOGRAPHING PREPARATION

FINDER DATA

HALF PRESSED

INSTRUCTING TO PREPARE PHOTOGRAPHING 502

STARTING BUFFERING OF PHOTOGRAPHED DATA

# FIG.5C
## INSTRUCTION FOR PHOTOGRAPHING

FINDER DATA

FULLY PRESSED

503

INSTRUCTING TO PHOTOGRAPH (+ TIMING DATA)

DETERMINING A FRAME INSTRUCTED TO PHOTOGRAPH FROM PHOTOGRAPHED DATA AS BUFFERED

# FIG.5D
## STORING PHOTOGRAPHED IMAGE

STILL IMAGE DATA

504

12

# FIG.6

FINDER IMAGE

S601 GENERATION OF FRAME → S602 GENERATION OF TIMING DATA → S603 THINNING OF FRAME → S604 RESIZING → S605 CODING OF FINDER IMAGE → S606 WIRELESS TRANSMISSION

# FIG.7

FINDER IMAGE

S701 GENERATION OF FRAME → S702 GENERATION OF TIMING DATA → S703 THINNING OF FRAME → S704 RESIZING → S705 CODING OF FINDER IMAGE → S706 WIRELESS TRANSMITTING

STORING IMAGE

S707 THINNING OF FRAME → S708 RESIZING → S709 CODING OF STORING IMAGE → S710 BUFFERING

# FIG.8

# FIG.9

*t1* TRANSFER TIME OF FINDER DATA

101

102

*t3* TRANSFER TIME OF PHOTOGRAPHING INSTRUCTION

*t2* PROCESSING TIME OF FINDER DISPLAY

# FIG.10

```
        START
          │  ╱S1001
          ▼
┌─────────────────────┐
│ TRANSMIT TEST FRAME │
└─────────────────────┘
          │  ╱S1002
          ▼
┌─────────────────────┐
│   EXECUTE DISPLAY   │
│ PROCESSING OF TEST FRAME │
└─────────────────────┘
          │  ╱S1003
          ▼
┌─────────────────────┐
│    TRANSMIT ACK     │
└─────────────────────┘
          │  ╱S1004
          ▼
┌─────────────────────┐
│ CALCULATE DELAY TIME │
└─────────────────────┘
          │
          ▼
        RETURN
```

# FIG.11

```
        START
          │  ╱S1101
          ▼
┌─────────────────────┐
│  MEASURE DELAY TIME │
└─────────────────────┘
          │  ╱S1102
          ▼
┌─────────────────────┐
│  CALCULATE SIZE OF  │
│ REQUIRED BUFFER AREA │
└─────────────────────┘
          │  ╱S1103
          ▼
        ╱IS  ╲
       ╱ CHANGE OF ╲      NO
      ⟨ BUFFER AREA ⟩─────────┐
       ╲ REQUIRED? ╱          │
        ╲        ╱            │
          │ YES  ╱S1104       │
          ▼                   │
┌─────────────────────┐       │
│ CHANGE SIZE OF BUFFER │      │
│        AREA         │       │
└─────────────────────┘       │
          │◄────────────────────┘
          ▼
        RETURN
```

# FIG.12

```
              ( START )
                  │         S1201
       ┌──────────▼──────────┐
      ║   MEASURE DELAY TIME  ║
       └──────────┬──────────┘
                  │         S1202
       ┌──────────▼──────────┐
       │  CALCULATE REQUIRED │
       │     FRAME RATE      │
       └──────────┬──────────┘
                  │         S1203
              ╱───▼───╲
            ╱    IS     ╲
          ╱   CHANGE OF   ╲    NO
         ⟨  FRAME RATE     ⟩─────┐
          ╲  REQUIRED?   ╱       │
            ╲         ╱          │
              ╲──┬──╱            │
                 │ YES  S1204    │
       ┌─────────▼─────────┐     │
       │ CHANGE FRAME RATE │     │
       └─────────┬─────────┘     │
                 │◄──────────────┘
              ( RETURN )
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H5072608 A
- JP H7274158 A
- JP H9284627 A

- JP H10070696 A
- JP 2005148559 A